# EUROPÄISCHE PATENTSCHRIFT

(11) **EP 2 496 070 B1**
(45) Veröffentlichungstag und Bekanntmachung des Hinweises auf die Patenterteilung: **01.04.2015**
(21) Anmeldenummer: 09765013.9
(22) Anmeldetag: 03.11.2009
(51) Int. Cl.: A01F 15/14

(54) **DOPPELKNOTEN-GARNKNOTER-EINHEIT FÜR GROSSPACKENPRESSEN MIT MEHREREN AUF EINER KNOTER-ANTRIEBSWELLE ZUSAMMGEFASSTEN DOPPELKNOTEN-GARNKNOTERN**
DOUBLE TWIN KNOTTER FOR A LARGE BALE PRESS WITH SEVERAL DOUBLE TWINE KNOTTERS ON A COMMON KNOTTER DRIVE SHAFT
DISPOSITIF DE DOUBLE NOEUDS POUR UNE PRESSE À GRANDES BALLES AVEC PLUSIEURS DISPOSITIF DE NOEUDS SUR UN ARBRE D'ENTRAÎNEMENT COMMUN

(43) Veröffentlichungstag der Anmeldung: 12.09.2012
(73) Patentinhaber: Rasspe Systemtechnik GmbH & Co. KG, 42929 Wermelskirchen (DE)
(72) Erfinder: SCHUMACHER, Friedrich Wilhelm, 57612 Birnbach (DE); SCHUMACHER, Heinz-Günter, 57612 Eichelhardt (DE); FLANHARDT, Michael, 40764 Langenfeld (DE); ACIMAS, Andreas, 42699 Solingen (DE)
(74) Vertreter: Grosse Schumacher Knauer von Hirschhausen
(86) Internationale Anmeldenummer: PCT/EP2009/007863
(87) Internationale Veröffentlichungsnummer: WO 2011/054360

(56) Entgegenhaltungen:
- EP-A1- 1 532 859
- DE-A1- 19 819 595
- DE-U1- 20 016 238
- US-A- 4 022 121

## Beschreibung

### GEBIET DER ERFINDUNG

Die Erfindung bezieht sich auf eine Doppelknoten-Gamknoter-Einheit insbesondere für Großpackenpressen mit Gambindung mit mehreren auf einer Knoter-Antriebswelle zusammgefassten Doppelknoter-Gamknotem gemäß dem Oberbegriff von Anspruch 1. Demnach sind die Doppelknoten-Garnknoter jeweils mit einer auf der um ihre Achse angetriebenen Knoter-Antriebswelle drehfest befestigten Knoter-Antriebsscheibe und mit einem der Knoter-Antriebsscheibe zugeordneten Knoter-Chassis versehen. Das Knoter-Chassis ist einenends bezüglich des Pressenkanals und anderenends bezüglich der Knoter-Antriebswelle räumlich feststehend gehalten und trägt eine zwei Knoten aufeinanderfolgend bildende Knoter-Baugruppe sowie einen von einer Kurvenbahn der Knoter-Antriebsscheibe angetriebenen Messerhebel. Die Knoter-Baugruppen umfassen zumindest: einen von einer ersten Antriebsverzahnung der Knoter-Antriebsscheibe angetriebenen Garnhalter und einen von einer zweiten Antriebsverzahnung der Knoter-Antriebsscheibe angetriebenen Knoterhaken. Der Messerhebel hat eine dreifache Funktion, indem er erstens der Garnführung, zweitens dem Durchtrennen des Garns und drittens dem Abstreifen der Garnschlingen vom Knoterhaken dient.

### TECHNOLOGISCHER HINTERGRUND

Doppelknoten-Garnknoter oder -knüpfer werden in vorwiegend mobilen Groß-Rechteckpackenpressen für Stroh, Heu, Silage und ähnlichem Gut sowie in der Wertstoffverwendung, z.B. für die Bündelung von Papier, Textilien, dünnen Blechen und dergleichen eingesetzt.

Mit solchen Knotern ausgerüstete Binde- oder Bündeleinrichtungen können aber auch Bestandteil von Verpackungsanlagen für die Umschnürung von Packen, Ballen oder Bündel aus hierfür geeigneten Materialien sein.

In stationären oder mobilen Großpackenpressen wird das Pressgut in einen im Querschnitt zumindest rechteckigen Presskanal, vorwiegend vorverdichtet, eingefüllt und zu einem rechteckigen Gutstrang gepresst. Dieser wird in quaderförmige Packen - gebräuchlich ist auch die Bezeichnung Vierkantballen - abgeteilt, deren Ober- und Unterseite sowie deren Außenseiten in Längsrichtung des Presskanals mit mehreren Garnsträngen umreift werden, die vor dem Ausstoß des Packens verknotet werden.

Die Zuführung der notwendigen Garne, der Knotvorgang innerhalb des Knoters sowie die Mitwirkung der am Zustandekommen eines Doppelknotens beteiligten Pressenelemente sind in dem Dokument DE-27 59 976 C1 (Hesston vom 22.09.1983), von der die Erfindung ausgeht und dessen Inhalt zum Gegenstand der vorliegenden Offenbarung gemacht wird, beschrieben.

In der auf einer CD im Jahr 2002 aufgezeichneten und verbreiteten Rasspe-Firmenschrift "Garnknoter für Ballenpressen" zum 175 Firmen-Jubiläum und deren Inhalt ebenfalls zum Gegenstand der vorliegenden Offenbarung gemacht wird, ist nicht nur die allgemeine Arbeitsweise eines Garnknoters, sondern auch der Unterschied zwischen Einfach- und Doppelknotung in allen Einzelheiten dargestellt.

Je nach Breite des Packens und dessen Pressdichte sind zwei oder mehrere Doppelknoten-Garnknoter auf der Knoter-Antriebswelle einer Presse nebeneinander montiert. Die Auswahl der Knoter und der den Knotvorgang unterstützenden Pressenelemente werden durch die Anzahl der erforderlichen Umreifung eines Packens bestimmt.

Die Knoter-Antriebswelle befindet sich entweder oberhalb oder unterhalb des zumeist waagerecht angeordneten Presskanals und in der Regel parallel zu diesem; bei anderen Presskanälen ist die Antriebswelle seitliche angeordnet.

Die Wirtschaftlichkeit z.B. der Halmfutterbergung hängt von den Berge-, Frachtund Einlagerungskosten ab. Stroh, vor allem gehäckseltes Gut, wird als Einstreu in Geflügelställen, Milchvieh-Liegeboxen und sonstigen Ställen verwendet. Es dient ferner als Futtermittel in rohfaserschwachen Futterrationen, als Bodenbedeckung im Erdbeeranbau und als Nährboden für Pilzzuchten. Um solche Verwendungen zu ermöglichen, werden die Großpackenpressen frontseitig mit Schneidwerken oder Häckselvorrichtungen ausgerüstet. In der Regel erfolgt in dem dem Hauptpresskanal vorgelagerten Zuführkanal eine Vorverdichtung des Pressgutes, welches dem Hauptpresskanal erst dann zugeführt wird, wenn eine vorbestimmte Menge mit definierter Pressgutdichte zur Verfügung steht. Durch solche Vorkehrungen entstehen hochverdichtete Packen mit hohem Gewicht.

Da die mobilen Pressen nicht mehr nur von einem zum anderen Feld umgesetzt sondern auch überbetrieblich eingesetzt werden, müssen sie tauglich für Straßenfahrten sein, d.h., sie müssen der Straßenverkehrszulassungsordnung genügen. Daraus folgt, dass die Maschinenabmessungen nicht unbegrenzt vergrößert werden können. Auch die Abmessungen der einzelnen Packen müssen für eine optimale LKW-Verladung und spätere Lagerung geeignete Werte aufweisen.

Um das Packengewicht noch weiter zu erhöhen, wodurch die zur Verfügung stehenden Transportkapazitäten besser als bisher ausgenutzt werden können und der Zusammenhalt eines Packens gestärkt wird, wird eine Steigerung der Verdichtung eines Packens bei vergleichbaren Feuchtigkeitsgraden des Pressgutes angestrebt. Bei einer solchen Zielsetzung ist jedoch zu berücksichtigen, dass die z.Zt. zur Verfügung stehenden Kunststoff-Pressgarne, vorwiegend Polypropylengarne, eine begrenzte Reißfestigkeit aufweisen; sie würden bei gesteigerter Pressgutdichte reißen, wenn die Packen aus dem Presskanal gestoßen werden. Die Dicke des Pressengams, die durch die Lauflänge des Gamstrangs bestimmt ist, die durch die Lauflänge des Gamstrangs bestimmt ist, die ausdrückt, wie viel Meter Garn ein Kilogramm wiegen (Maßeinheit: m/kg), kann nicht ohne weiteres erhöht werden, weil die einzelnen Knoterkomponenten einerseits auf die Verarbeitung der am Markt befindlichen Pressengame abgestellt sind; andererseits würden dickere Garne mit gesteigerter Reißfestigkeit die Abmessungen der Doppelknoter unvorteilhaft vergrößern, wobei es ungewiss ist, ob eine sichere Funktion der Knoter nach dem so genannten Deering-Arbeitsprinzip überhaupt zu erzielen ist. Ein weiteres Problem stellt die Knotenfestigkeit bei zunehmender Gamdicke dar.

Um folglich Ausfälle zu vermeiden, muss die Kraft für den Zusammenhalt eines Packens auf noch mehr als bisher realisierbare Gamstränge verteilt werden. Wenn der Abstand der einzelnen Gamstränge zueinander enger wird, als bisher durch die Breite des Garndoppelknoters vorgegeben ist, so wirkt sich das auch vorteilhaft auf den Zusammenhalt eines aus kleingehäckseltem Stroh bestehenden Packens aus.

Um z.B. das Gewicht eines Strohpackens - gleiche Abmessungen und gleicher Feuchtigkeitsgrad vorausgesetzt - um 25% zu erhöhen, müsste eine gattungsgemäße Großpackenpresse, die bisher mit 6 Doppelknoten-Gamknotem nach Hesston bestückt ist, mit 8 Knotern aber unveränderter Länge der Knoter-Antriebswelle ausgerüstet werden. Der in dem Dokument DE-27 59 976 C1 (Hesston) beschriebene gattungsgemäße Doppelknoten-Garnknoter besteht aus einer Antriebseinrichtung, nachfolgend auch als "Antriebs-Baugruppe" bezeichnet, einem Rahmen, nachfolgend auch als "Knoter-Chassis" bezeichnet, sowie einer Knoter-Baugruppe und einem Messerhebel und benötigt zum benachbarten Doppelknoten-Garnknoter so viel Abstand, dass der am Rahmen angelenkte Antriebsarm des Messerhebels, dessen unteres Ende in einer Gabelung mündet, nicht an den benachbarten Doppelknoten-Garnknoter stößt, wenn er sich in seine äußere Totlage bewegt.

### DARSTELLUNG DER ERFINDUNG

Der Erfindung liegt die Aufgabe zugrunde, insbesondere für eine Großpackenpresse mit Garnbindung eine gattungsgemäße Doppelnoten-Garnknoter-Einheit so zu gestalten, dass die wirksame Baubreite der einzelnen Doppelknoten-Garnknoter unter Beibehaltung des an sich bekannten Doppelknoten Arbeitsprinzips so verringert wird, dass eine Knoter-Antriebswelle für eine Vielzahl von Doppelknoten-Garnknotern mit mehr Doppelknoter-Garnknotern als bisher ausgestattet werden kann.

Zur Lösung dieser Aufgabe wird eine Doppelknoten-Garnknoter-Einheit mit den Merkmalen des Anspruchs 1 und ein dementsprechender Doppelknoten-Garnknoter vorgeschlagen. Demnach ist bei einer gattungsgemäßen Doppelknoten-Garnknoter-Einheit bzw. einem gattungsgemäßen Doppelknoten-Garnknoter vorgesehen, dass die Knoter-Baugruppe bezüglich der Nabe der Knoter-Antriebsscheibe und des antriebswellenseitigen Endes des Knoter-Chassis insgesamt axial versetzt angeordnet ist. Die jeweilige Knoter-Baugruppe und ggf. auch der Schwenkbereich des Messerhebels überlappt in Achsrichtung der Knoter-Antriebswelle mit der Knoter-Antriebsscheibe des benachbarten Doppelknoten-Garnknoters auf einer Teillänge der Knoter-Baugruppe und ggf. auch des Schwenkhebels des Messerbereichs. Auf diese Weise ergibt sich eine gewisse dimensionierungsmäßige Entkopplung zwischen den dimensionierungsmäßigen Erfordernissen der Nabe der Knoter-Antriebsscheibe und antriebswellenseitigen Befestigung des Knoter-Chassis von der Anordnung und Ausführung der Knoter-Baugruppe und des Messerhebels. Nicht unerhebliche Längenabschnitte des rechten und/oder linken benachbarten Doppelknoten-Garnknoters überlappen also mit dem dazwischen liegenden Doppelknoten-Garnknoter. Auf diese Weise wird die wirksame Länge eines Doppelknoten-Garnknoters bezüglich der Knoter-Antriebswelle soweit verkürzbar, wie es durch die Antriebs-Baugruppe oder die Knoter-Baugruppe oder den Messerhebel gestattet ist, wobei die wirksame Länge des Doppelknoten-Garnknoters bestimmt wird durch diejenige der drei Baugruppen, die bezüglich der Knoter-Antriebswelle die größte Länge aufweist. Die Überlappung kann 5 bis 30 mm und mehr betragen. Durch die Erfindung wird eine Verringerung der wirksamen Baubreite eines Doppelknoten-Garnknoters einschließlich der während des Betriebs bezüglich des Knoter-Chassis verschwenkenden Knoterbauteile um 40-50 mm und mehr möglich. Dabei wird unter "wirksamer Baubreite" im Sinne der Erfindung die von einem Doppelknoten-Garnknoter im Zusammenbauzustand mehrerer Doppelknoten-Garnknoter insgesamt benötigte Mindest-Antriebswellen-Teillänge verstanden. Die Erfindung ist auch dann verwirklicht, wenn ein einzelner oder einige wenige der Doppelknoten-Garnknoter der Einheit den Versatz aufweisen. Bevorzugt weisen möglichst viele Doppelknoten-Garnknoter einer Einheit diesen Versatz auf. Ebenso ist es im Sinne der Erfindung nach wie vor auch möglich, die Doppelknoten-Garnknoter mit axialem Abstand zueinander auf der Knoter-Antriebswelle anzuordnen. Bevorzugt werden solche Abstände aber gering gehalten oder ganz vermieden. Demnach kann durch die Erfindung bei entsprechender Gestaltung der vier Baugruppen (Antriebs-Baugruppe, Knoter-Baugruppe, Messerhebel und Knoter-Chassis) die wirksame Baubreite eines Doppelknoten-Garnknoters ganz erheblich verringert werden, wobei sich besonders bevorzugte Möglichkeiten hierzu aus dem Nachfolgenden ergeben.

Gemäß einer ersten Ausführungsform der Erfindung wird die Formgebung des Messerhebels gegenüber den für Doppelknoten-Garnknotern bisher bekannten Ausführungsformen verändert, um bei seinem Verschwenken ein Ausstoßen an Bauteilen benachbarter Knoter zu vermeiden. Hierzu kann vorgesehen sein, dass der Schwenkarm des Messerhebels, der an seinem unteren Ende eine Gabelung mit mehreren Garnführungsbereichen für die zu verknotenden Gamstränge, einen Abstreifer und ein Garnmesser zum Trennen der fertigen Knoten von den Garnsträngen aufweist, gerade gestreckt ist. Er kann sich parallel oder annähernd parallel zu der Ebene der Knoterantriebsscheibe erstrecken, wenn er sich in seiner unverschwenkten (ersten) Totlage befindet. Sein Querschnitt ist vorzugsweise polygon und insbesondere rechteckig mit ggf. gerundeten Ecken. Demgegenüber waren die bekannten Schwenkarme der Messerhebel sowohl von Einfachknoten-Garnknotern (DE 20 57 291 C3) als auch von Doppelknoten-Garnknotern (DE 27 59 976 C1) stark geschweift ausgeführt und mit Rippen versehen.

Nach der Erfindung ist zumindest eine Teilschenkellänge des Schwenkarmes des Messerhebels gerade gestreckt. Vorzugsweise sind zwei gerade gestreckte Teillängenbereiche vorgesehen, von denen sich einer näher zum Dreh- oder Schwenkpunkt des Messerhebels am Knoter-Chassis und der andere näher zum freien Arbeitsende des Schwenkarmes befindet. Zwischen den beiden Teillängen kann eine kurze Verkröpfung des Schwenkarmes derart vorgesehen sein, dass die drehpunktnahe Teillänge sich in der unverschwenkten Totlage nahe der chassisseitigen Stirnfläche der Knoter-Antriebsscheibe erstreckt und die vom Drehpunkt entfernte Teillänge sich radial außen bezüglich von der Knoter-Antriebsscheibe erstreckt und den Drehbereich des Knoterhakens freilässt. Die vom Drehpunkt entfernte Teillänge kann bezüglich der drehpunktnahen Teillänge in Richtung auf die zugehörende Knoterscheibe zu abgewinkelt sein. Dieser Winkel kann zwischen 1 und 30°, vorzugsweise zwischen 1 und 10° und besonders bevorzugt zwischen 2 und 8° betragen. Der Anlenkbereich des Schwenkarmes des Messerhebels an den chassisseitigen Drehpunkt, der auch den von der Knoter-Antriebsscheibe bewegten Antriebshebel trägt, kann bezüglich der mindestens einen gerade gestreckten Teillänge des Schwenkarmes des Messerhebels eine deutliche Winkellage, insbesondere in einer Größenordnung zwischen 30 und 60° einnehmen.

Rechtwinklig zur Ebene der Knoter-Antriebsscheibe kann der Schwenkarm des Messerhebels gerade gestreckt und im Gegensatz zu den aus den vorgenannten Druckschriften bekannten Messerhebelarmen ungeschweift und unverrippt sein, so dass der Platzbedarf für die Verschwenkbewegung minimiert wird. Der Arbeitsbereich des Messerhebels mit seiner Gabelung für mehrere Garnführungsbereiche, seinem Abstreifer und seinem Garnmesser kann sich in Form eines L-Schenkels an den Schwenkarm anschließen, so dass ausschweifende Zonen dieses Arbeitsbereiches entfallen. Sofern die zweite Gabelzinke der Garnführungsbereiche länger als der kurze L-Schenkel ausgeführt werden soll, ist diese Gabelzinke, parallel zur Antriebswelle gesehen, der L-Form entsprechend gebogen und nimmt somit keinen weiteren Schwenkraum in Anspruch. Auch parallel zur Antriebsscheibe gesehen, schließt sich der Antriebsbereich bevorzugt als L-Schenkel an den Schwenkarm des Messerhebels an.

Der dynamisch hoch beanspruchte Messerhebel kann aus einem Werkstoff bestehen, dessen Zugfestigkeit wesentlich über derjenigen der herkömmlichen Hebel liegt. Die Hebelbereiche, die besonders auf Abrieb beansprucht werden, wie Gamführungen oder Rollenlagerung, können vorteilhaft partiell gehärtet werden, wenn ein legierter Vergütungsstahl eingesetzt wird. - Sämtliche vorerwähnten besonderen Merkmale des Messerhebels sind für gattungsgemäße Doppelknoten-Garnknoter von eigenständig erfinderischer Bedeutung.

Während sich der Knoter-Haken wie üblich nahe an der Knoter-Antriebsscheibe befindet, erstreckt sich der Garnhalter von der Knoter-Antriebsscheibe auf der von dem Knoter-Haken abgelegenen Seite in Achsrichtung der Knoter-Antriebswelle fort. Die axiale Baulänge der zumindest aus dem Knoterhaken und dem Garnhalter bestehenden Knoter-Baugruppe kann vorteilhaft durch den axial von der Knoter-Antriebsscheibe am meisten entfernten Punkt des Garnhalters begrenzt sein. Dieser Bereich der Knoter-Baugruppe greift ganz oder teilweise unter die Knoter-Antriebsscheibe des benachbarten Doppelknoten-Garnknoters und überlappt mit dieser, so dass hierdurch die wirksame Baubreite des Doppelknoter-Garnknoters in Achsrichtung gering gehalten wird. Eine derartige Anordnung des Garnhalters wird vorteilhaft unterstützt, wenn das Knoter-Chassis quer zur Knoter-Antriebswelle gesehen einen L-förmigen Tragarm umfasst, der, quer zur Stirnfläche der Knoter-Antriebsscheibe gesehen, sich bezüglich des Messerhebels strahlenförmig von der Knoter-Antriebswelle fort erstreckt. Ein 90°-Getriebe, das wie üblich den Garnhalter bewegt, kann im Bereich der aneinandergrenzenden Schenkel des Knoter-Chassis verschmutzungsarm integriert sein, wobei das Getriebegehäuse auch aus der Garnhaltung resultierende Kräfte aufnehmen kann.

Die Länge des kürzeren L-Schenkels des Messerhebels kann geringer sein als die Länge des kürzeren L-Schenkels des Knoter-Chassis, so dass auch bei maximal von der Antriebsscheibe fort verschwenktem Messerhebel, nämlich in seiner Abstreifposition, der Messerhebel über das Knoter-Chassis und/oder den Garnhalter axial nicht hinausragt. Ein solches Hinausragen ist bei entsprechenden Ausführungsformen des Arbeitsbereiches des Messerhebels aber grundsätzlich möglich und für die Baulängenverkürzung des Doppelknoten-Garnknoters unschädlich, denn der Arbeitsbereich des Messerhebels kann vorteilhafter Weise ebenfalls mit der benachbarten Antriebsscheibe zumindest teilweise überlappen. Die längeren L-Schenkel des Knoter-Chassis und des Messerhebels lassen zwischen einander in an sich bekannter Weise den Platzbedarf für den Knoterhaken und den Garnhalter aufgrund ihrer strahlenförmigen Verläufe zwischen sich frei. Der in zwei Ebenen L-förmige Messerhebel umgreift den Knoterhaken in allen Schwenkpositionen.

Die Axiallängen der Knoter-Baugruppe und der Nabe der Knoter-Antriebsscheibe und des antriebswellenseitigen Endes des Knoter-Chassis können also voneinander unabhängig und damit vorteilhaft gestaltet werden. Seitens der Nabe kann z.B. eine Verkürzung von deren axialen Länge im Vergleich zu der aus der DE 297 19 715 U1 bekannten Konstruktion vorgenommen werden. Insbesondere kann ein nabenartiger Ansatz an der vom Knoter-Chassis abgewandten Seite der Knoter-Antriebsscheibe, wie er in der DD 279 161 A5 beschrieben wird, entfallen. Eine oder mehrere Zwischenlagerungen der Knoter-Antriebswelle zusätzlich zu den beiden Endlagern dieser Welle kann dadurch ersetzt werden, dass ein oder mehrere der Knoter-Chassis mit dem Pressenrahrnen starr verbunden werden. Hierdurch wird verhindert, dass sich die mit mehreren Knotern bestückte Knoterantriebswelle während ihres Umlaufes durchbiegt. Diese Verbindung kann durch einen Steg am Knoter-Chassis erfolgen, das mit einem passenden Gegenstück am Pressenrahmen verschraubt ist. Alternativ kann ein Steg, der mit einem Deckel des Knoter-Chassis durch Anguss oder Verschrauben starr verbunden ist, zur Befestigung vorhanden sein.

Der den Messerhebel führende Nocken in der Knoter-Antriebsscheibe, der an der Bildung des ersten Knotens teil hat, kann um ca. 5° radial zurückversetzt werden. Durch diese Maßnahme wird sichergestellt, dass die dem jeweiligen Knoter zugeordnete Pressennadel mit dessen Messerhebel nicht in Berührung kommt. Wie in dem Dokument DE-20 2005 011 458 beschrieben, kann die Pressennadel, wenn sich ihr oberer Bereich durch den Knoter bewegt, von einer Führungsrolle unterhalb des Knoterhakentriebels auf der Bewegungsbahn der Nadel fixiert werden. Der Versatz des vorerwähnten Nockens in der Knoterantriebsscheibe wirkt sich vorteilhaft auf die Knotengebilde aus, indem nennenswerte längere Knotenenden als bisher üblich entstehen, wodruch ein Auflösen der Knoten unter Zugspannung wirksam verhindert wird. Dieser Aspekt ist von eigenständiger erfinderischer Bedeutung.

Da im Gegensatz zu Einfachknotem der Doppelknoter zwei Knoten während einer Umdrehung der Knoter-Antriebsscheibe entstehen lässt, muss auch der Knoterhaken zweimal umlaufen. Dabei ist es unerlässlich, dass das Hakenmaul, welches von einem Kopf und einer Zunge des Knoterhakens gebildet wird, nach dem Abzug des ersten Knotens unversehens schließt, damit die Rolle am hinteren Ende der Zunge für die Bildung des zweiten Knotens erneut sicher unter den Schließer laufen kann. Damit das Maul des Knoterhakens rasch und zuverlässig schließt, wird die Knoterzunge durch eine Feder und einen Stift, die in dem Schaft des Knoterhakens angeordnet sind, zusätzlich beaufschlagt; z.B. wie aus der DE-201 10 162 U1 bekannt. Der Schließer selbst übt Druck auf die Rolle am hinteren Ende der Zunge des Knoterhakens aus, indem er von einer unterhalb seiner Knoterrahmenauflage angeordneten Druckfeder über einen Stift angezogen wird. Die sonst bei dieser Knoterbauart üblichen, außen liegenden Druck- oder Flachfedern würden einer Verringerung der angestrebten Baubreite eines Doppelknoters hinderlich sein.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Doppelknoten-Garnknoter-Einheit für Großpackenpresse mit Garnbindung mit einer Mehrzahl von Doppelknoten-Garnknotem dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: eine Doppelknoten-Gamknoter-Einheit für Großpackenpressen mit Gambindung mit sieben auf einer Knoter-Antriebswelle zusammengefassten Doppelknoten-Gamknotem in einer Seitenansicht von der dem Messerhebel gegenüberliegenden Seite aus gesehen, etwa entsprechend der Ansicht C-C gemäß Fig. 3;
- Fig. 2: von der Doppelknoten-Garnknoter-Einheit nach Figur 1 einen einzelnen Doppelknoten-Garnknoter von der gegenüberliegenden Seite aus gesehen;
- Fig. 3: den Doppelknoten-Garnknoter nach Figur 2 in einer (rechten) Stimseitenansicht (Ansicht A-A gemäß Fig. 2);
- Fig. 4: von dem Garnknoter nach Figuren 2 und 3 eine perspektivische Seitenansicht von der der Darstellung nach Figur 2 gegenüberliegenden Seite aus gesehen - entsprechend Ansicht B-B gemäß Figur 3 sowie
- Fig. 5: einen bezüglich der Ausführungsform nach Figuren 1 bis 4 modifizierten Messerhebel in leicht perspektivischer Seitenansicht, etwa entsprechend der Ansicht gemäß Fig. 2.

### DETAILLIERTE BESCHREIBUNG VON AUSFÜHRUNGSBEISPIELEN

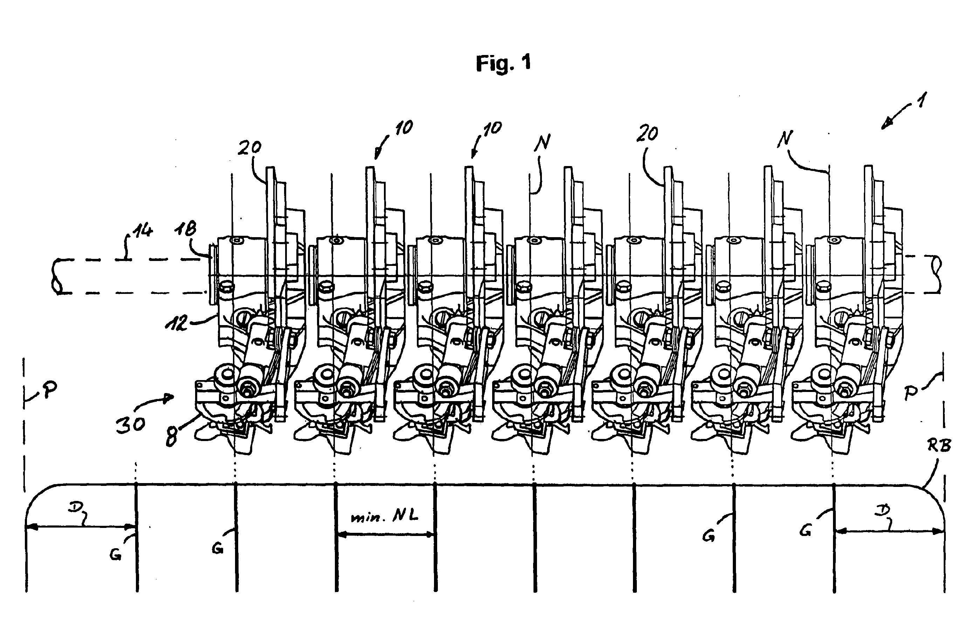

Aus Figur 1 ist eine Doppelknoten-Garnknoter-Einheit für Großpackenpressen mit Gambindung für acht auf einer Knoter-Antriebswelle 14 angeordnete Doppelknoten-Garnknoter 10 von denen der Übersichtlichkeit halber der achte (links) fortgelassen wurde und bei der die parallel zu einer Kante eines Rechteckballens RB ausgepressten Stroh in einem Presskanals P einer Großpackenpresse in an sich bekannter Weise angeordnet ist, ersichtlich. Rechtwinklig zur Knoter-Antriebswelle 14 verlaufen die Nadel-Bewegungsebenen N und mithin auch die Gamschlingen G um den Rechteckballen RB, welche im Mindestabstand (NL) der Doppelknoten-Garnknoter 10 parallel zueinander verlaufen. Die Randabstände D zu den seitlichen Ballenrauten betragen vorzugsweise 120 bis 160 mm.

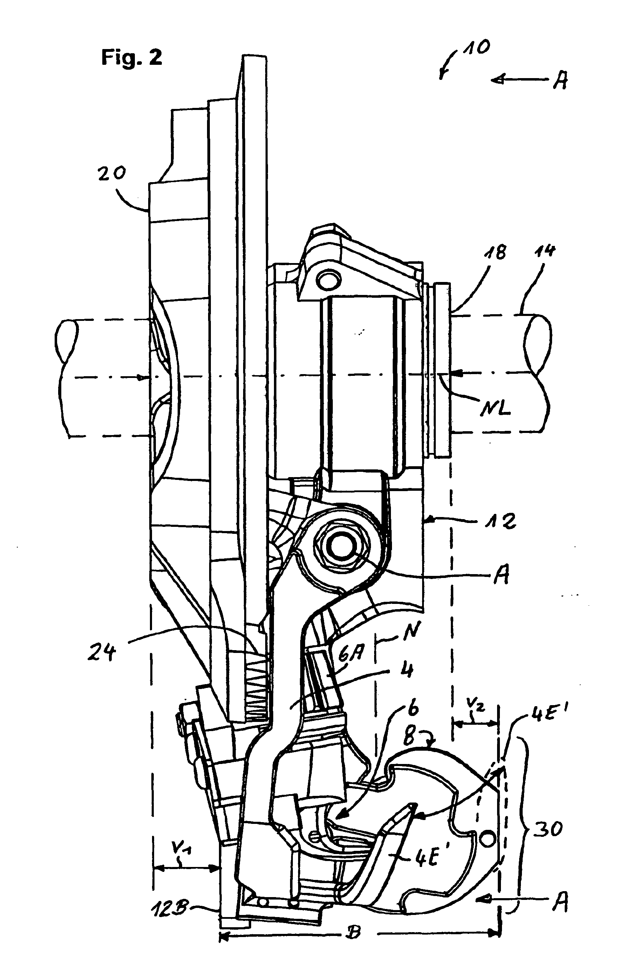

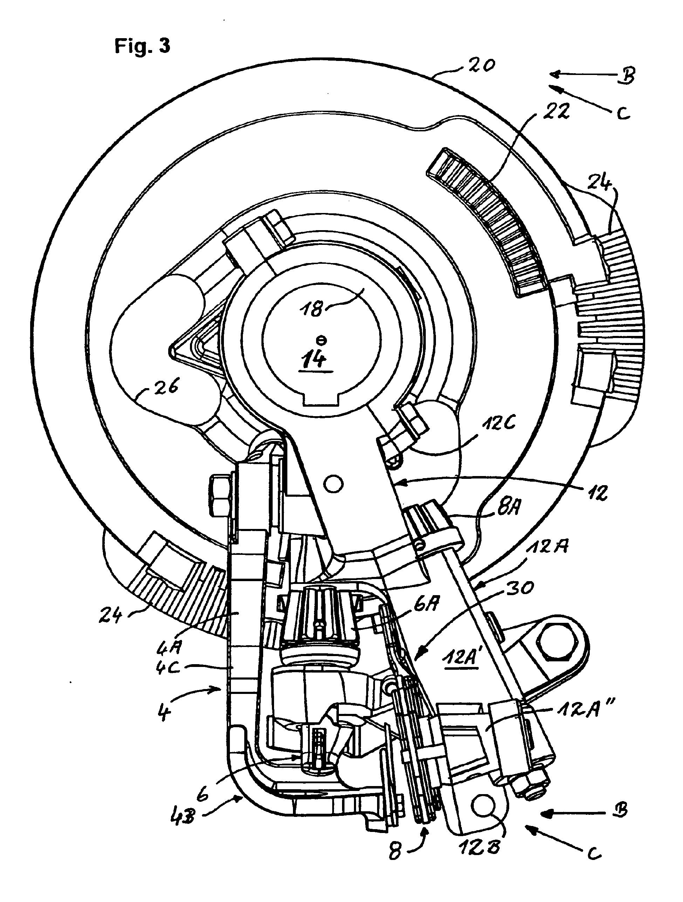

Jeder Doppelknoten-Garnknoter 10 umfasst zumindest: eine Knoter-Antriebsscheibe 20, welche mittels ihrer Nabe 18 (Fig. 3) drehfest mit der Knoter-Antriebswelle 14 verbunden ist, sowie ferner ein Knoter-Chassis 12, eine Knoter-Baugruppe 30 und einen Messerhebel 4. Das Knoter-Chassis 12 ist der Knoter-Antriebsscheibe 20 derart zugeordnet, dass das Knoter-Chassis 12 z.B. mittels eines Befestigungsauges 12B (siehe Fig. 3) bezüglich eines Pressenkanals P räumlich feststehend gehalten ist. Andererseits ist das Knoter-Chassis 12 von der Knoter-Antriebswelle 14 räumlich feststehend gehalten. Dies kann dadurch erfolgen, dass die Nabe 18, mit welcher die Knoter-Antriebsscheibe 20 drehfest verbunden ist, an einem von der Knoter-Antriebsscheibe 20 auskragenden Nabenbereich ein Drehlager des Knoter-Chassis 12 aufnimmt. Eine von dem übrigen Knoter-Chassis 12 lösbare Lagerhalbschale 12C ist aus Figur 3 ersichtlich. Damit kann das Knoter-Chassis in einer wieder lösbaren Weise auf der Nabe 18 angeordnet werden. Die Nabe 18 hat in dem dargestellten und insoweit bevorzugten Ausführungsbeispiel die aus Figur 2 ersichtliche Länge NL und erstreckt sich somit von der einen Stirnseite der Knoter-Antriebsscheibe 20 über das gegenüberliegende Ende der Nabe 18 der Knoter-Antriebsscheibe 20 und den im Bereich der Knoter-Antriebswelle 14 gelegenen Bereich des Knoter-Chassis 12 hinaus.

Die sich mit der Knoter-Antriebswelle 14 für zwei Garnknotenbildungen einmal um 360° drehende Knoter-Antriebsscheibe 20 weist auf ihrem Umfang zwei radial außen liegende Antriebsverzahnungssegmente 24 für die Drehung des Knoterhakens 6 sowie zwei radial weiter innen liegende Antriebsverzahnungssegmente 22 für den Drehantrieb des Gamhalters 8 und schließlich eine Kurvenbahn 26 für zwei Schwenkbewegungen des Messerhebels 4 je Umdrehung der Knoter-Antriebsscheibe 20 auf.

Die Knoter-Baugruppe 30 umfasst zumindest: einen von den ersten Antriebsverzahnungen 22 der Knoterantriebsscheibe 20 angetriebenen Garnhalter 8 sowie einen von den zweiten Antriebsverzahnungen 24 der Knoter-Antriebsscheibe angetriebenen Knoterhaken 6, deren Funktion und Zusammenwirken allgemein bekannt ist. Das Knoter-Chassis 12 trägt diese beiden Elemente der Knoter-Baugruppe 30 an einem von der Nabe 18 radial fortweisenden Tragarm 12A. Dieser ist in dem dargestellten und insoweit bevorzugten Ausführungsbeispiel etwa L-förmig gestaltet, wobei der kürzere L-Schenkel 12A" zu dem längeren L-Schenkel 12A' etwa rechtwinklig oder ggf. unter einem geringfügig anderen Winkel in einer von der Knoter-Antriebsscheibe 20 fort weisenden Richtung orientiert ist. Diese Richtung bildet einen spitzen Winkel mit der Knoter-Antriebswelle 14 oder verläuft parallel zu ihr und trägt in drehbar gelagerter Weise den an sich bekannten Garnhalter 8. In dem dargestellten und insoweit bevorzugten Ausführungsbeispiel wird ein Winkelgetriebe, welches die Drehung des Antriebsritzels 8A, auf die etwa rechtwinklig zum Antriebsritzel 8A orientierte Drehantriebswelle des Gamhalters 8 überträgt, von dem Tragarm 12A eingehaust.

Der Tragarm 12A des Knoter-Chassis 12 trägt fernerhin den Knoterhaken 6 und sein Antriebsritzel 6A, welches mit den Antriebsverzahnungen 24 kämmt.

Das Knoter-Chassis 12 trägt in drehgelagerter Form fernerhin den Messerhebel 4, welcher sich etwa radial von der Knoter-Antriebswelle 14 fort erstreckt und in Richtung der Antriebswelle gesehen vorzugsweise einen spitzen Winkel mit dem Tragarm 12A des Knoter-Chassis 12 bildet (siehe Fig. 3). Grundsätzlich ist auch eine parallele Anordnung des Schwenkarms 4A zum Tragarm 12A möglich. Besonderheiten des Messerhebels 4 werden weiter unten erläutert.

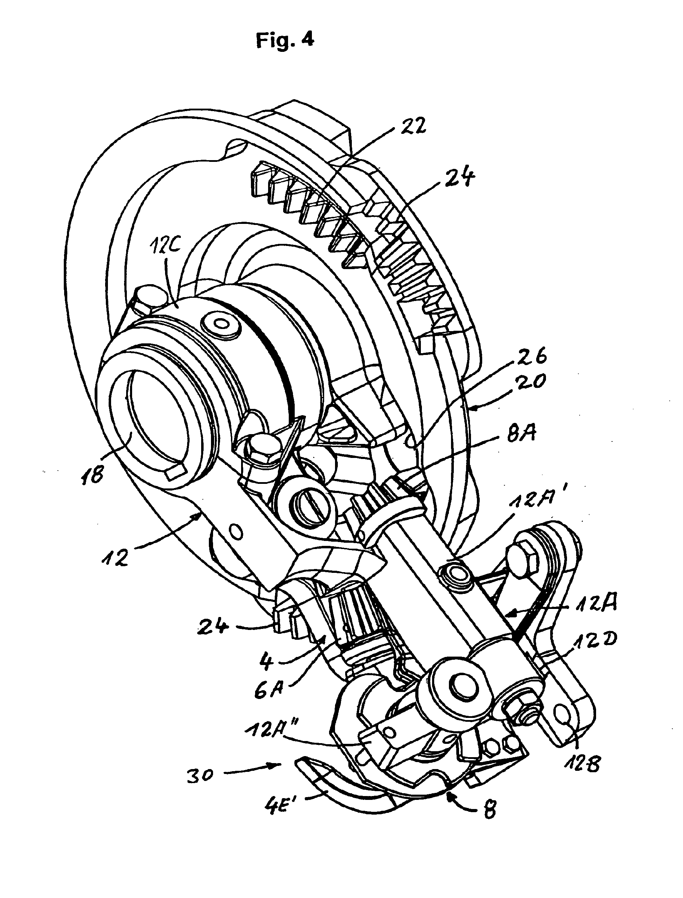

Wie aus Figur 2 und 4 ersichtlich, ergibt sich zwischen der antriebswellenseitigen Befestigungszone des Knoter-Chassis 12 und dem kürzeren L-Schenkel 12A" eine etwa C-förmige Öffnung, in welche die in der Zeichnung nicht dargestellte, aber an sich bekannte Garnnadel etwa parallel zur Knoterantriebsscheibe 20 hineinschwenkbar ist. Die von der Gamnadel aufgespannte Bewegungsebene für jeden Knoter ist in Figuren 1 und 2 jeweils durch die Linie N angedeutet. Die in Achsrichtung der Antriebswelle 14 nebeneinander angeordneten Elemente der Knoter-Baugruppe 30, nämlich der Knoterhaken 6 und der Garnhalter 8 sind im Wesentlichen parallel versetzt zum kurzen L-Schenkel 12A" des Tragarms 12A des Knoter-Chassis 12 angeordnet. Dabei bildet der Garnhalter 8 in etwa gleichauf mit dem freien Ende des kürzeren L-Schenkels 12A" des Knoter-Chassis 12 das axial von der Knoterantriebsscheibe 20 am entferntesten liegende Ende des Doppelknoten-Garnknoters 10. Dieses Ende überragt das von der Knoter-Antriebsscheibe 20 fortweisende Ende der Nabe 18 deutlich um ein Versatzmaß V₂, wie auch aus Figur 1 deutlich ersichtlich. Auch das in Achsrichtung der Antriebswelle gegenüberliegende Ende der Knoter-Baugruppe 30 ist vom anderen Stirnende der Knoter-Antriebsscheibe 20 um ein Versatzmaß V₁ versetzt angeordnet und zwar gleichsinnig mit dem Versatz V₂. Dadurch ist die Knoter-Baugruppe 30 insgesamt bezüglich der Nabe 18 deutlich achsversetzt angeordnet und der Garnhalter 8 eines Doppelknoten-Garnknoters 10 kann zur Knoter-Antriebsscheibe 20 des ihm benachbarten Doppelknoten-Garnknoters deutlich überlappend und radial außerhalb jener benachbarten Antriebsscheibe angeordnet sein, wie dies deutlich aus Figur 1 verständlich wird. Das dem Garnhalter gegenüberliegende Ende der Knoter-Baugruppe 30 kann insbesondere von dem Befestigungsauge 12B des Knoter-Chassis 12 gebildet werden. Letzteres kann an einem Seitenarm 12D des Tragarms 12A befestigt sein, wobei der Seitenarm 12D sich in etwa entgegen gesetzter Richtung zum kurzen L-Schenkel 12A" des Tragarms 12 erstreckt. Damit ist im Wesentlichen die gesamte in Achsrichtung der Antriebswelle gesehene maximale Breite B der Baugruppe 30 definiert. Sie ist in dem dargestellten und insoweit bevorzugten Ausführungsbeispiel etwa so groß wie die Nabenlänge NL.

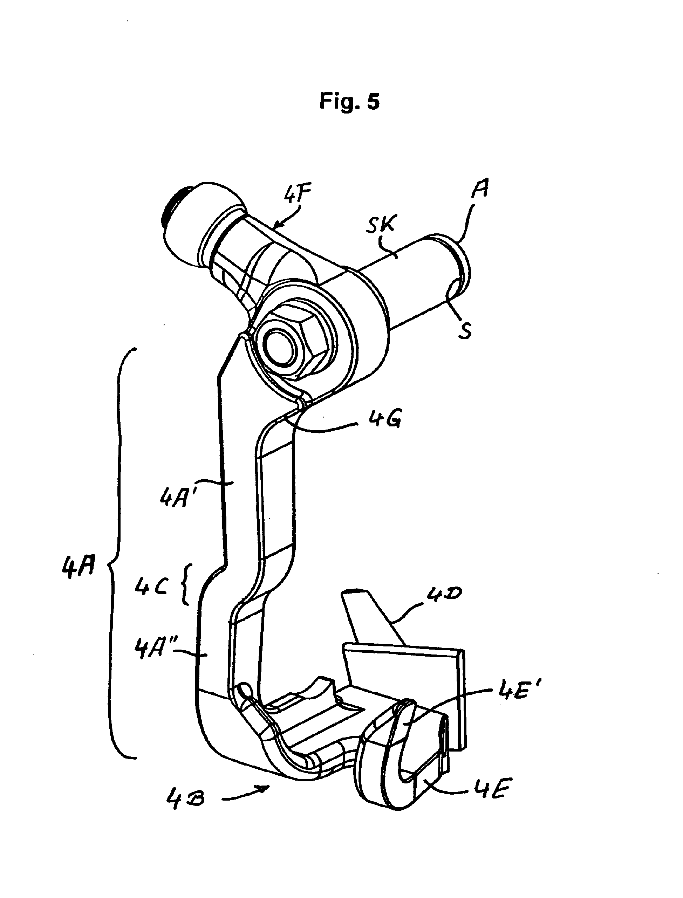

Der neuartig gestaltete Messerhebel wird im Zusammenhang mit Figur 5 wie folgt erläutert: Der um eine Welle A bezüglich des Chassis 12 schwenkbare Messerhebel 4 wird über einen Antriebshebel 4F in üblicher Weise schwenkangetrieben mit Hilfe der Kurvenbahn 26 der Knoter-Antriebsscheibe 20. Der Schwenkarm 4A des Messerhebels 4 ist, in Richtung der Welle A gesehen im Wesentlichen gerade gestreckt und von etwa rechteckigem Querschnitt mit gerundeten Kanten. Er besteht im Wesentlichen aus einer ersten Teillänge 4A' und einer zweiten, von der Welle A weiter entfernten Teillänge 4A". Zwischen beiden Teillängen ist eine kurz gehaltene Verkröpfung 4C vorgesehen und beide Teillängenbereiche nehmen einen von 180° geringfügig abweichenden stumpfen Winkel miteinander ein, so dass in Richtung der Welle A gesehen, seitlich neben der distalen Teillänge 4A" genügend Freiraum für den Knoterhaken 6 verbleibt, wie aus Figur 2 besonders deutlich ersichtlich. Ein um etwa 45° bezüglich des Schwenkarmes 4A schräg geneigter Anlenkbereich 4G sorgt dafür, dass bei gleichzeitig ausreichender Länge des Antriebshebels 4F der Schwenkarm 4A in seiner in Figur 2 dargestellten Ruhe-Totlage möglichst nahe der Knoter-Antriebsscheibe 20 zu liegen kommt. Der das Gammesser 4D tragende Arbeitsbereich 4B des Messerhebels 4 ist zum Schwenkarm 4A etwa rechtwinklig erstreckt, so dass sich im Wesentlichen eine L-Form ergibt. Der Arbeitsbereich 4B beinhaltet auch einen gabelförmigen Bereich 4E mit einem um etwa 90° umgebogenen Zinken 4E', wodurch Gamführungsaufgaben sowie eine Abstreiferfunktion bezüglich des Knoterhakens 6 erfüllt werden. Auch in rechter Seitenansicht des Messerhebels 4 gemäß Figur 5, welcher aus Figur 3 ersichtlich ist, ist der Schwenkarm 4A gerade gestreckt und der Messerhebel 4 insgesamt L-förmig geformt, wobei der kürzere L-Schenkel wiederum den Arbeitsbereich 4B bildet.

Das Ausführungsbeispiel nach Figur 5 unterscheidet sich von den vorangehenden Ausführungsbeispielen dahingehend, dass der Gabelzinken 4E' parallel oder annähernd parallel zur unteren Teillänge 4A" des Schwenkarmes 4 umgebogen und insoweit länger als bei dem vorangehenden Ausführungsbeispielen gestaltet ist.

In der Ruhe-Totlage nach Figur 2 erstreckt sich die untere Teillänge 4A" im Bereich der Antriebsscheibe 20 und radial außerhalb derselben während der Teillängenbereich 4A' sich parallel seitlich der zugehörenden Stirnseite der Antriebsscheibe 20 befindet. Gleichwohl ragt auch der Arbeitsbereich 4B des Messerhebels 4 vorzugsweise nicht in die Versatzzone V₁ der Knoter-Baugruppe 30 hinein. Wegen der nicht unerheblichen Ausladung des kürzeren L-Schenkels, nämlich des Arbeitsbereiches 4B des Messerhebels 4 ragt dieser in seiner maximalen Ausschwenklage, wie sie gestrichelt in Figur 2 dargestellt ist, in der Regel über die Breite B der Knoter-Baugruppe 30 und damit nicht über den Garnhalter 8 seitlich hinaus, was aber nicht schädlich ist.

Auch die Anordnung und Bemessung des Antriebshebels 4F stellt sicher, dass die Totlagen und der Schwenkbereich des Arbeitsbereiches 4B korrekt sind. Verrippungen des Schwenkarmes des Messerhebels 4 entfallen völlig. Der Messerhebel ist insgesamt aus legiertem Vergütungsstahl hergestellt und wird in besonders auf Abrieb beanspruchten Zonen, wie Gamführungen oder Rollenlagerung vorzugsweise partiell gehärtet.

Um unter den beengten Platzverhältnissen, die zwischen den auf der Knoter-Antriebswelle 14 montierten Doppelknoten Gamknotem herrschen, ein Nachschmieren der verschiedenen Dreh- und Schwenklager während der so genannten Reisezeit einer Großpackenpresse, also zwischen zwei Revisionszeitpunkten möglichst zu vermeiden, kann vorgesehen sein, dass alle Wellen (Knoter-Antriebswelle, Knoterhakenwelle, usw.) an den jeweiligen Lagerenden genutet und mit einem Dichtring S versehen sind. Zwischen der jeweiligen Welle und der zugehörenden Nabe ist ein Lagerspiel vorgesehen, das eine Schmierstoffkammer zwischen den Dichtringen bildet. Die Kammern sind mit einer die Lebensdauer des Knoters überstehenden Fettfüllung versehen. Für Reparaturzwecke können die Lagerstellen trotzdem mit Schmiernippeln versehen sein. Eine derartige Permanentschmierung ist von eigenständig erfinderischer Bedeutung.

**BEZUGSZEICHENLISTE**

| | | | |
|---|---|---|---|
| 1 | Doppelknoten-Garnknoter Einheit | 14 | Knoter-Antriebswelle |
| | | 18 | Nabe der Knoter-Antriebsscheibe |
| 4 | Messerhebel | 20 | Knoter-Antriebsscheibe |
| 4A | Schwenkarm | 22 | Antriebsverzahnung/Garnhalter |
| 4A' | Teillängen | 24 | Antriebsverzahnung/Knoterhaken |
| 4A" | Teillängen | 26 | Kurvenbahn |
| 4B | Arbeitsbereich | 30 | Knoter-Baugruppe |
| 4C | Verkröpfung | | |
| 4D | Messer | A | Welle |
| 4E | Gabel | B | Breite (von 30) |
| 4E' | Zinken | D | Randabstände |
| 4F | Antriebshebel | G | Gamschlingen |
| 4G | Anlenkbereich | N | Nadel-Bewegungsebene |
| 6 | Knoterhaken | NL | Nabenlänge / Nadel-Abstand |
| 6A | Antriebsritzel | P | Pressenkanal |
| 8 | Garnhalter | RB | Rechteckballen |
| 8A | Antriebsritzel | S | Dichtring |
| 10 | Gamknoter | SK | Schmierstoffkammer |
| 12 | Knoter-Chassis | V₁ | Versatzmaß 1 |
| 12A | Tragarm | V₂ | Versatzmaß 2 |
| 12A' | L-Schenkel, lang | | |
| 12A" | L-Schenkel, kurz | A-A | Ansicht |
| 12B | Befestigungsauge | B-B | Ansicht |
| 12C | Lagerhalbschale des Knoter-Chassis | C-C | Ansicht |
| 12D | Seitenarm | | |

## Patentansprüche

1. Doppelknoten-Garnknoter-Einheit, Insbesondere für eine Großpackenpresse mit Garnbindung mit einer Mehrzahl von auf einer Knoter-Antriebswelle zusammengefassten Doppelknoten-Garnknotern (10),
bei der jeder Doppelknoten-Garnknoter (10) zumindest eine Knoter-Antriebsscheibe (20), ein Knoter-Chassls (12), eine Knoter-Baugruppe (30) und einen Messerhebel (4) umfasst und bei dem
- die Knoter-Antriebsscheibe (20) auf der um ihre Achse antreibbaren Knoter-Antriebswelle (14) drehfest befestigt ist,
- das Knoter-Chassis (12) der Knoter-Antriebsscheibe (20) derart zugeordnet ist, dass das Knoter-Chassis (12) einen Ends bezüglich eines Pressenkanals (P) und anderen Ends von der Knoter-Antriebswelle (14) räumlich feststehend gehalten ist,
- das Knoter-Chassis (12) eine zwei Knoten aufeinander folgend bildende Knoter-Baugruppe (30) sowie den von einer Kurvenbahn (26) der Knoter-Antriebsscheibe (20) angetriebenen Messerhebel (4) trägt, und
- die Knoter-Baugruppe (30) zumindest einen von einer ersten Antriebsverzahnung (22) der Knoter-Antriebsscheibe (20) angetriebenen Garnhalter (8), sowie einen von einer zweiten Antriebsverzahnung (24) der Knoter-Antriebsscheibe (20) angetriebenen Knoterhaken (6) umfasst,
**dadurch gekennzeichnet,**
dass die Knoter-Baugruppe (30) bezüglich der Nabe (18) der Knoter-Antriebsscheibe (20) und des antriebswellenseitigen Endes des Knoter-Chassis (12) insgesamt axial versetzt angeordnet Ist, so dass und die Knoter-Baugruppe (30) in Achsrichtung der Knoter-Antriebswelle (14) mit der Knoter-Antriebsscheibe (20) des benachbarten Doppelknoten-Garnknoters (10) auf einer Teillänge der Knoter-Baugruppe überlappend angeordnet ist.

2. Doppelknoten-Garnknoter-Einheit nach Anspruch 1, **dadurch gekennzeichnet, dass** die Breite (B) der Knoter-Baugruppe (30) durch den axial von der Knoter-Antriebsscheibe (20) am weitesten entfernten Punkt des Garnhalters (8) begrenzt ist.

3. Doppelknoten-Garnknoter-Einheit nach Anspruch 1 oder 2, **dadurch gekennzeichnet, dass** das Knoter-Chassis (12), quer zur Knoter-Antriebswelle (14) gesehen, einen L-förmigen Tragarm (12A) umfasst.

4. Doppelknoten-Garnknoter-Einheit nach einem der Ansprüche 1 bis 3, **dadurch gekennzeichnet, dass** ein Schenkel (12A") des Tragarmes (12A) des Knoter-Chassis (12) in Achsrichtung der Knoter-Antriebswelle (14) über die Nabe (18) der Knoter-Antriebsscheibe (20) und des antriebswellenseitigen Ende des Knoter-Chassis (12) hinausragt und mit der Baulänge der Knoter-Antriebsscheibe (20) des direkt benachbarten Doppelknoten-Garnknoters (10) auf einer Teillänge des Knoter-Chassis (12) überlappend angeordnet ist.

5. Doppelknoten-Garnknoter-Einheit nach einem der Ansprüche 1 bis 4, **dadurch gekennzeichnet, dass** in einen Tragarm (12A) des Knoter-Chassis (12) ein Getriebe zum Betätigen des Gamhalters (8) gehäuseartig integriert ist.

6. Doppelknoten-Garnknoter-Einheit nach dem Oberbegriff von Anspruch 1, insbesondere nach einem der Ansprüche 1 bis 5, **dadurch gekennzeichnet, dass** der Schwenkarm (4A) des Messerhebels (4) gerade gestreckt ist.

7. Doppelknoten-Garnknoter-Einheit nach Anspruch 6, **dadurch gekennzeichnet, dass** der Schwenkarm (4A) parallel oder annähernd parallel zur Knoter-Antriebsscheibe (20) angeordnet ist, wenn er sich in seiner Ruhe-Totlage befindet.

8. Doppelknoten-Garnknoter-Einheit nach einem der Ansprüche 1 bis 7. **dadurch gekennzeichnet, dass** der Querschnitt des Schwenkarmes (4A) des Messerhebels (4) einen polygonen oder rechteckigen Querschnitt aufweist.

9. Doppelknoten-Garnknoter-Einheit nach einem der Ansprüche 5 bis 7, **dadurch gekennzeichnet, dass** der Schwenkarm (4A) des Messerhebels (4) zwei gerade gestreckte Teillängenbereich (4A', 4A") aufweist.

10. Doppelknoten-Garnknoter-Einheit nach einem der Ansprüche 1 bis 9, **dadurch gekennzeichnet, dass** der Schwenkarm (4A) des Messerhebels (4) eine Verkröpfung (4C) aufweist.

11. Doppelknoten-Garnknoter-Einheit nach einem der Ansprüche 6 bis 10, **dadurch gekennzeichnet, dass** der Schwenkarm (4A) des Messerhebel (4) eine Abwinkelung von 1 bis 30° aufweist.

12. Doppelknoten-Gamknoter-Einheit nach einem der Ansprüche 1 bis 11, **dadurch gekennzeichnet, dass** der einen Schwenkarm (4A) und einen Arbeitsbereich (4B) aufweisende Messerhebel (4) in Bilckrichtung auf seine Schwenkwelle (A) L-förmig gestaltet ist.

13. Doppelknoten-Garnknoter-Einheit nach einem der Ansprüche 1 bis 12, **dadurch gekennzeichnet, dass** der einen Schwenkarm (4A) und einen Arbeitsbereich (4B) aufweisende Messerhebel (4) in Blickrichtung parallel zur Knoter-Antriebswelle (14) L-förmig gestaltet ist.

14. Doppel-Garnknoter-Einheit nach dem Oberbegriff von Anspruch 1, insbesondere nach einem der Ansprüche 1 bis 13, **dadurch gekennzeichnet, dass** mindestens eines ihrer Dreh- oder Schwenklager nahe der oder an den Lagerenden mit Dichtringen zwischen Nabe und Welle versehen sind und die durch das zur Verfügung gestellte Lagerspiel zwischen den Dichtringen eines Lagers vorhandene Kammer eine mit Schmierstoff gefüllte Schmierstoffkammer ist

## Claims

1. A double knot-twine knotter unit, in particular for a large bale press with twine tying with a plurality of double knot-twine knotters (10) assembled on one knotter driveshaft,
in which each double knot-twine knotter (10) comprises at least one knotter drive disk (20), one knotter chassis (12), one knotter module (30), and one blade lever (4), and in which
- the knotter drive disk (20) is attached such that it cannot rotate relative to the knotter driveshaft (14), which can be driven about its axis,
- the knotter chassis (12) is assigned to the knotter drive disk (20) such that the knotter chassis (12) is held fixed in space, at one end with respect to a bale press channel (P), and at the other end by the knotter driveshaft (14),
- the knotter chassis (12) carries a knotter module (30) forming two knots, one following another, and also the blade lever (4), which is driven by a cam track (26) of the knotter drive disk (20), and
- the knotter module (30) comprises at least one twine holder (8) driven from a first toothed drive segment (22) of the knotter drive disk (20), and also one knotter hook (6) driven from a second toothed drive segment (24) of the knotter drive disk (20),
**characterised in that**,
the knotter module (30) is arranged overall axially offset with respect to the hub (18) of the knotter drive disk (20) and the driveshaft side end of the knotter chassis (12), and such that the knotter module (30) is arranged overlapping on a sub-length of the knotter module with the knotter drive disk (20) of the adjacent double knot-twine knotter (10) in the axial direction of the knotter driveshaft (14).

2. The double knot-twine knotter unit in accordance with Claim 1, **characterised in that** the width (B) of the knotter module (30) is defined by the point of the twine holder (8) axially furthermost from the knotter drive disk (20).

3. The double knot-twine knotter unit in accordance with Claim 1 or 2, **characterised in that** the knotter chassis (12), as viewed transverse to the knotter driveshaft (14), comprises an L-shaped carrier arm (12A).

4. The double knot-twine knotter unit in accordance with one of the Claims 1 to 3, **characterised in that** one leg (12A") of a carrier arm (12A) of the knotter chassis (12) projects in the axial direction of the knotter driveshaft (14) beyond the hub (18) of the knotter drive disk (20) and the driveshaft-side end of the knotter chassis (12), and is arranged overlapping on a sub-length of the knotter chassis (12) with the build length of the knotter drive disk (20) of the immediately adjacent double-knot twine-knotter (10).

5. The double knot-twine knotter unit in accordance with one of the Claims 1 to 4, **characterised in that** a gearbox for the actuation of the twine holder (8) is integrated in the form of a housing into a carrier arm (12A) of the knotter chassis (12).

6. The double knot-twine knotter unit in accordance with the preamble of Claim 1, in particular in accordance with one of the Claims 1 to 5, **characterised in that** the pivot arm (4A) of the blade lever (4) is straight.

7. The double knot-twine knotter unit in accordance with Claim 6, **characterised in that** the pivot arm (4A) is arranged parallel or approximately parallel to the knotter drive disk (20), when it is located in its rest-deadpoint position.

8. The double knot-twine knotter unit in accordance with one of the Claims 1 to 7, **characterised in that** the cross-section of the pivot arm (4A) of the blade lever (4) has a polygonal or rectangular cross-section.

9. The double knot-twine knotter unit in accordance with one of the Claims 5 to 7, **characterised in that** the pivot arm (4A) of the blade lever (4) has two straight sub length regions (4A', 4A").

10. The double knot-twine knotter unit in accordance with one of the Claims 1 to 9, **characterised in that** the pivot arm (4A) of the blade lever (4) has a cranked section (4C).

11. The double knot-twine knotter unit in accordance with one of the Claims 6 to 10, **characterised in that** the pivot arm (4A) of the blade lever (4) is angled by 1 to 30°.

12. The double knot-twine knotter unit in accordance with one of the Claims 1 to 11, **characterised in that** the blade lever (4), having a pivot arm (4A) and a working region (4B), is configured in an L-shape, as viewed in the direction of its pivot shaft (A).

13. The double knot-twine knotter unit in accordance with one of the Claims 1 to 12, **characterised in that** the blade lever (4) having a pivot arm (4A) and a working region (4B) is configured in an L-shape, as viewed in the direction parallel to the knotter driveshaft (14).

14. The double knot-twine knotter unit in accordance with the preamble of Claim 1, in particular in accordance with one of the Claims 1 to 13, **characterised in that** at least one of its rotational or pivotal bearings is provided near to or on the ends of the bearing with sealing rings between hub and shaft, and the chamber that exists as a result of the bearing clearance provided between the sealing rings of a bearing is a lubrication chamber filled with lubricant.

## Revendications

1. Unité noueuse de doubles noeuds de fil, en particulier pour presse à grosses balles, comportant une pluralité de noueurs de doubles noeuds de fil (10) regroupés sur un arbre d'entraînement de noueur,
dans laquelle chaque noueur de doubles noeuds de fil (10) comprend au moins un disque d'entraînement de noueur (20), un châssis de noueur (12), un sous-ensemble de noueur (30) et un levier de lame (4) et dans laquelle
- le disque d'entraînement de noueur (20) est fixé de manière fixe en rotation sur l'arbre d'entraînement de noueur (14) pouvant être entraîné autour de son axe,
- le châssis de noueur (12) est associé au disque d'entraînement de noueur (20) de manière à ce que le châssis de noueur (12) soit maintenu immobilisé dans l'espace d'un côté par rapport à un canal de presse (P) et de l'autre côté par l'arbre d'entraînement de noueur (14),
- le châssis de noueur (12) supporte un sous-ensemble de noueur (30) formant deux noeuds successivement et le levier de lame (4) entraîné par une piste à came (26) du disque d'entraînement de noueur (20),
- le sous-ensemble de noueur (30) comprend au moins un porte-fil (8) entraîné par un premier engrenage d'entraînement (22) du disque d'entraînement de noueur (20) ainsi qu'un crochet à noeuds (6) entraîné par un second engrenage d'entraînement (24) du disque d'entraînement de noueur (20) ;
**caractérisée en ce que**
le sous-ensemble de noueur (30) est disposé globalement décalé axialement par rapport au moyeu (18) du disque d'entraînement de noueur (20) et de l'extrémité située au niveau de l'arbre d'entraînement du châssis de noueur (12), de sorte que le sous-ensemble de noueur (30) est disposé dans le sens de l'axe de l'arbre d'entraînement de noueur (14) en chevauchement avec le disque d'entraînement de noueur (20) du noueur de double noeuds voisin (10) sur une longueur partielle du sous-ensemble de noueur.

2. Unité noueuse de doubles noeuds de fil selon la revendication 1, **caractérisée en ce que** la largeur (B) du sous-ensemble de noueur (30) est limitée par le point le plus éloigné axialement du disque d'entraînement de noueur (20) du porte-fil (8).

3. Unité noueuse de doubles noeuds de fil selon la revendication 1 ou 2, **caractérisée en ce que** le châssis de noueur (12), vu transversalement à l'arbre d'entraînement de noueur (14), comprend un bras porteur en forme de L (12A).

4. Unité noueuse de doubles noeuds de fil selon une des revendications 1 à 3, **caractérisée en ce qu'**une branche (12A") du bras porteur (12A) du châssis de noueur (12), dans le sens de l'axe de l'arbre d'entraînement de noueur (14), dépasse du moyeu (18) du disque d'entraînement de noueur (20) et de l'extrémité située au niveau de l'arbre d'entraînement du châssis de noueur (12) et est disposée avec la longueur structurelle du disque d'entraînement de noueur (20) du noueur de doubles noeuds directement voisin (10) en chevauchement sur une longueur partielle du châssis de noueur (12).

5. Unité noueuse de doubles noeuds de fil selon une des revendications 1 à 4, **caractérisée en ce que**, dans un bras porteur (12A) du châssis de noueur (12), une transmission permettant d'actionner le porte-fil (8) est intégrée à la manière d'un carter.

6. Unité noueuse de doubles noeuds de fil selon une des revendications 1 à 5, **caractérisée en ce que** le bras oscillant (4A) du levier de lame (4) est étiré tout droit.

7. Unité noueuse de doubles noeuds de fil selon la revendication 6, **caractérisée en ce que** le bras oscillant (4A) est disposé parallèlement ou pratiquement parallèlement au disque d'entraînement de noueur (20) quand il se trouve à son point mort de repos.

8. Unité noueuse de doubles noeuds de fil selon une des revendications 1 à 7, **caractérisée en ce que** la section transversale du bras oscillant (4A) du levier de lame (4) a une section transversale polygonale ou rectangulaire.

9. Unité noueuse de doubles noeuds de fil selon une des revendications 6 à 7, **caractérisée en ce que** le bras oscillant (4A) du levier de lame (4) présente deux zones de longueur partielle (4A, 4A") s'étirant tout droit.

10. Unité noueuse de doubles noeuds de fil selon une des revendications 1 à 9, **caractérisée en ce que** le bras oscillant (4A) du levier de lame (4) présente un coude (4C).

11. Unité noueuse de doubles noeuds de fil selon une des revendications 6 à 10, **caractérisée en ce que** le bras oscillant (4A) du levier de lame (4) décrit un angle de 1 à 30°.

12. Unité noueuse de doubles noeuds de fil selon une des revendications 1 à 11, **caractérisée en ce que** le levier de lame (4) présentant un bras oscillant (4A) et une zone opératoire (4B) a une conformation en L vu dans le sens de son arbre oscillant (A).

13. Unité noueuse de doubles noeuds de fil selon une des revendications 1 à 12, **caractérisée en ce que** le levier de lame (4) présentant un bras oscillant (4A) et une zone opératoire (4B) a une conformation en L vu dans le sens parallèle à l'arbre d'entraînement de noueur (14).

14. Unité noueuse de doubles noeuds de fil selon le préambule de la revendication 1, en particulier selon une des revendications 1 à 13, **caractérisée en ce qu'**au moins un de ses paliers rotatifs ou pivotants, proche des ou situé aux extrémités d'appui, est pourvu de bagues d'étanchéité et que la chambre créée par le jeu existant entre les bagues d'étanchéité d'un palier est une chambre à lubrifiant remplie de lubrifiant.
